# EUROPÄISCHE PATENTSCHRIFT

(11) **EP 0 712 679 B1**
(45) Veröffentlichungstag und Bekanntmachung des Hinweises auf die Patenterteilung: **10.05.2000**
(21) Anmeldenummer: 95117148.7
(22) Anmeldetag: 31.10.1995
(51) Int. Cl.: B23H 1/02, B23H 9/14, B23H 7/18, B23H 7/16

(54) **Verfahren und Vorrichtung zur Steuerung von Funkenerosionsprozessen**
Method and apparatus for discharge machining control
Méthode et appareil de commande d'usinage par décharge

(30) Priorität: 17.11.1994 DE 4441055
(43) Veröffentlichungstag der Anmeldung: 22.05.1996
(73) Patentinhaber: AGIE SA, 6616 Losone (CH)
(72) Erfinder: Marchesi, Alberto, CH-6672 Gordevio (CH); Boccardoro, Marco, CH-6653 Verscio (CH)
(74) Vertreter: Turi, Michael, Dipl.-Phys.

(56) Entgegenhaltungen:
- EP-A- 0 333 170
- CH-A- 525 061
- DE-A- 3 204 799
- DE-A- 3 300 552
- US-A- 5 159 167

## Beschreibung

Die vorliegende Erfindung befaßt sich mit einem Verfahren und einer Vorrichtung zur Steuerung von Funkenerosionsprozessen, d. h. von Schneid- und Senkerosionsprozessen.

Funkenerosionsprozesse werden zur hochpräzisen Bearbeitung elektrisch leitfähiger Werkstücke durch Elektroden verwendet. Die resultierende Werkstückform wird durch verschiedene Faktoren wie Elektrodenform, Bearbeitungsintensität etc. bestimmt. Für die Bearbeitungsqualität, insbesondere für die Einstellung der gewünschten Präzision, ist neben einer genauen Bahnsteuerung ein möglichst konstantes und stabiles Verhalten der Bearbeitungselektrode maßgeblich; insbesondere kommt es darauf an, den für die jeweils gewünschten Prozeßbedingungen benötigten Abstand zwischen der Elektrode und dem gerade zu bearbeitenden Werkstücksbereich möglichst genau einzuhalten; ebenso die dazugehörige Bearbeitungsdauer und Bearbeitungsintensität. Dies ist vor allem bei sehr dünnen und flexiblen Elektroden problematisch, wie sie im Bereich der Mikroerosion, beispielsweise beim Mikrobohren, verwendet werden. Schwierigkeiten treten hier insbesondere im Umgang mit Störungen wie Kurzschlüssen auf.

Die CH-PS-525 061 (KONDO) offenbart allgemeine Grundlagen der automatisierten Steuerung von Funkenerosionsprozessen. Hierzu zählen insbesondere Detektoreinrichtungen zum Ermitteln von Spannungen und Strömen, eine logische Schaltung, welche die dort gewonnenen Informationen verarbeitet und eine Steuereinrichtung, welche aufgrund dessen den Funkenerosionsprozeß steuert. Die Bewegung der Elektrode erfolgt in Relation zur jeweils aktuellen Spaltleitfähigkeit (d.i. die Leitfähigkeit im Dielektrikum zwischen Elektrode und Werkstück) über einen Servomechanismus. Störungen wie Kurzschlüsse oder Lichtbögen werden unter anderem durch Begrenzen des Kurzschlußstroms bzw. Wegbewegen der Elektrode vom Werkstück behoben.

Die EP-A-0 333 170 (AGIE) bzw. die US-PS-4 864 091 vergleicht eine Soll-Entfernung, welche den aktuell gewünschten Prozessbedingungen für die Bearbeitung des Werkstücks entspricht, mit der Ist-Entfernung zwischen Erosionselektrode und Werkstück. Aus dem Vergleich wird gegebenenfalls ein Fehlersignal gebildet, das über eine Tiefpaßfilterschaltung zu einer Steuerschaltung für die Bewegung der Elektrode geführt wird.- Die jeweilige Ist-Entfernung wird vorzugsweise aus der aktuellen Erosionsspannung ermittelt.

Die US-PS-5 159 167 (CHAIKIN et al.) befaßt sich unter anderem mit einer Positionskontrolle für eine Elektrode mittels Funkensensoren und mit einer präzisen Lochgrößen-Regulierung anhand einer "vollständigen" Kontrolle der elektrischen Entladungen.

Die DE 32 04 799 A1 (YAMADA et al.) betrifft eine Einrichtung zur elektrischen Entladungsbearbeitung von Werkstükken, welche sich am "Ende eines Bearbeitungsvorgangs", d.h. in dem Augenblick, in welchem die Elektrode durch das Werkstück hindurchtritt, automatisch abschaltet.

Aus der DE 33 00 552 C2 (GARBAJS et al.) ist ein Steuerungsverfahren für einen funkenerosiven Bearbeitungsprozeß, bei welchem die im Arbeitsspalt zwischen einem Werkzeug und dem zu bearbeitenden Werkstück auftretenden Entladungsimpulse detektiert und aufgrund ihres jeweiligen charakteristischen Spannungsverlaufs analysiert werden, an sich bekannt. Dabei wird unter anderem zwischen abnormalen Entladungen und Kurzschlußimpulsen aufgrund galvanischer Kurzschlüsse unterschieden, woraufhin die Maschine in unterschiedlicher Weise reagiert.

Diese bekannten Vorrichtungen und/oder Verfahren können häufig nicht angemessen auf plötzliche Veränderungen der Erosionsbedingungen reagieren, etwa auf die plötzlichen Veränderungen im Moment des Durchstoßes einer Mikrobohrelektrode durch die Werkstückunterseite. Ab diesem Moment kann nämlich die Erosionsspülflüssigkeit nach unten ablaufen, oder allgemeiner ausgedrückt durch das Werkstück hindurchlaufen. Dadurch ändern sich der Spüldruck, die Spülgeschwindigkeit und die Bewegungsrichtung der Spülflüssigkeit drastisch. Infolgedessen wird die Lage der Elektrode instabil, es bilden sich Gasblasen im Bohrspalt und die bereits erodierten Teilchen ändern, sofern sie sich noch im Bohrspalt befinden, ebenfalls ihre Bewegungsrichtung und werden wieder nach unten gespült. Dadurch kommt es zu "nicht-mechanischen" bzw. "sonstigen" Kurzschlüssen, abrupten Variationen der Spannung und Verfälschungen der Steuermeßwerte, da die Spaltspannung ihre normale Bedeutung (proportional zur Spaltweite) verliert. Die bekannten Regelsysteme reagieren hierauf mit einem schnellen Rückzug der Elektrode und vergrößern so die Instabilität bzw. sie beenden die Bearbeitung unabhängig davon, ob das tatsächlich erzielte Bearbeitungsergebnis dem gewünschten entspricht oder nicht. Im Ergebnis kommt es insbesondere im ersten Fall zu einer verlängerten Verweildauer der Elektrode im Ausgangsbereich des Bohrlochs. Da die bekannten Verfahren und/oder Vorrichtungen diese Extremsituation nicht als solche berücksichtigen können, werden während der Instabilitätsphase weiterhin Erosionsimpulse freigegeben, die den Lochdurchmesser unregelmäßig und in unerwünschter und nicht steuerbarer Weise vergrößern.

Hiervon ausgehend zielt die Erfindung auf einen störungsfreieren Funkenerosionsprozess ab. Sie erreicht dieses Ziel durch die Gegenstände der Ansprüche 1 bzw. 15.

Anspruch 1 sieht ein Verfahren zur Steuerung wenigstens eines Funkenerosionsprozesses zwischen wenigstens einem Werkstück und wenigstens einer Elektrode, insbesondere einer Mikrobohrungselektrode vor, bei welchem die Erosionsstrecke in wenigstens einen Meßabschnitt und in wenigstens einen zeitlich nachfolgenden Erosionsabschnitt unterteilt wird und in dem Meßabschnitt während der Erosionsbearbeitung Meßwerte wenigstens eines Prozeßparameters erfaßt werden. Aus den Meßwerten wenigstens eines Prozeßparameters werden (analog oder nachträglich) ein oder mehrere Steuerungswerte ermittelt und diese zumindest teilweise in dem Erosionsabschnitt zur Steuerung des Funkenerosionsprozesses beibehalten. Anspruch 15 sieht eine hierfür geeignete Vorrichtung vor, welche mit Antriebs- und Antriebssteuerungsmitteln für die Relativbewegung zwischen wenigstens einem Werkstück und einer Elektrode, Generatormitteln für die Erzeugung von Erosionsfunken, Mitteln zur Messung von Werten von Prozeßparametern, Umwandlungsmitteln zur Umwandlung solcher Meßwerte in Steuerungswerte sowie Speichermitteln ausgestattet ist. Dabei unterteilen Steuerungsmittel die Erosionsstrecke in wenigstens einen Meßabschnitt und in wenigstens einen zeitlich nachfolgenden Erosionsabschnitt; die Meßmittel erfassen in dem Meßabschnitt während der Erosionsbearbeitung Meßwerte für wenigstens einen Prozeßparameter. Die Mittel zur Umwandlung solcher Meßwerte in Steuerungswerte ermitteln aus den Meßwerten wenigstens eines Prozeßparameters einen oder mehrere Steuerungswerte. Die Speichermittel speichern die so erhaltenen Steuerungswerte und die Antriebssteuerungsmittel behalten die Steuerungswerte schließlich zumindest teilweise in dem Erosionsabschnitt zur Steuerung der Erosionsbearbeitung bei.

Ein solches Verfahren bzw. eine solche Vorrichtung ermöglicht es einer Erosionsmaschine, auf einfache Weise und ohne Beanspruchung eines Operateurs Steuerungsvorgaben für einen störungsfreieren Erosionsbetrieb selbständig zu ermitteln. Dies kann sowohl auf einer eigens hierfür vorgesehenen Teststrecke, als auch auf einem Abschnitt einer zu erodierenden Strecke geschehen. Prinzipiell können so die Charakteristika einer beliebigen Werkstück-Elektroden-Paarung bei unterschiedlichen Betriebsparametern automatisch ermittelt werden. Die so erhaltenen Daten können sowohl nur für das "Meßwerkstück" als auch für beliebig viele gleichartige Werkstücke verwendet werden. Insbesondere wird dabei die Möglichkeit geschaffen, Störungen durch geeignete Steuerungswerte weitgehend im Vorfeld zu verhindern.

In einer bevorzugten Ausführungsform (Anspruch 2) beinhaltet wenigstens einer der ermittelten Steuerungswerte eine für eine gewünschte Werkstückbearbeitung geeignete Vorschubgeschwindigkeit der Elektrode(n). Vorzugsweise ist diese Vorschubgeschwindigkeit kleiner als die mittlere Vorschubgeschwindigkeit im Meßabschnitt (Anspruch 3 und 4) und wird durch Multiplikation der mittleren Vorschubgeschwindigkeit im Meßabschnitt mit einem Koeffizienten, welcher kleiner als eins (Anspruch 5) und vorzugsweise eine Funktion des Verhältnisses Elektrodendurchmesser/Werkstückdicke ist (Anspruch 6), ermittelt. In einer weiteren bevorzugten Ausgestaltung (Anspruch 7) der Erfindung wird die Elektrode in wenigstens einem auf den Meßabschnitt folgenden Abschnitt, insbesondere dem Schlußabschnitt, mit der ermittelten Vorschubgeschwindigkeit wenigstens solange konstant bewegt, wie kein Kurzschluß auftritt.

Vorteile dieser bevorzugten Ausführungsformen ergeben sich aus dem folgenden Sachverhalt: insbesondere wenn die Elektrode mit einer zu hohen Geschwindigkeit bewegt wird, verursacht sie "mechanische" Kurzschlüsse durch direkte Kontakte mit dem Werkstück. Im Meßabschnitt wird die Elektrode daher -wie es dem Stand der Technik entspricht- regelmäßig nach Kurzschlüssen wieder zurückgezogen werden müssen. Wenn aber gleichzeitig eine geeignete Vorschubgeschwindigkeit ermittelt wird, können in allen dem Meßabschnitt folgenden Abschnitten solche "mechanischen" Kurzschlüsse durch die "sichere" Geschwindigkeit weitgehend vermieden werden. Dies ergibt einen erheblich ungestörteren und somit präziseren Erosionsprozeß. Die einzelnen vorgestellten Ausführungsformen führen zu verschiedenen Abstufungen dieses positiven Effekts. Insbesondere die Gegenstände der Ansprüche 5 und 6 ermöglichen dabei außerdem eine besonders einfache und zugleich besonders sachgerechte Handhabung der Erfindung durch den Operateur.

Anspruch 8 sieht ein Verfahren nach einem der Ansprüche 1-7 vor, bei welchem zwischen mechanischen und sonstigen Kurzschlüssen unterschieden und die Elektrodenbewegung bei mechanischen Kurzschlüssen anders als bei sonstigen Kurzschlüssen gesteuert wird. Anspruch 16 sieht eine hierfür geeignete Vorrichtung nach Anspruch 15 vor, welche mit Mitteln zur Messung von Werten von Prozeßparametern und Mitteln zur Umwandlung solcher Meßwerte in Steuerungswerte bzw. -signale ausgestattet ist. Dabei messen die Mittel zur Messung von Werten von Prozeßparametern beim Auftreten von Kurzschlüssen diesbezüglich signifikante Werte. Die Mittel zur Umwandlung von Meßwerten in Steuerungswerte unterscheiden aufgrund dieser Meßwerte zwischen mechanischen und sonstigen Kurzschlüssen und geben bei mechanischen Kurzschlüssen andere Steuerungswerte bzw. -signale als bei sonstigen Kurzschlüssen aus.

Nicht-mechanische Kurzschlüsse können beispielsweise durch bereits wegerodierte Teilchen in der Spülflüssigkeit verursacht werden. Da diese Teilchen rasch weggespült werden, ist es sinnvoll, solche Kurzschlußsituationen anders zu behandeln, als mechanische Kurzschlüsse. Insbesondere wird durch die differenzierte Behandlung von Kurzschlüssen die Möglichkeit geschaffen, einen wesentlich ungestörteren Erosionsbetrieb aufrecht zu erhalten. Gerade durch die Kombination einer "sicheren" Vorschubgeschwindikeit mit dieser differenzierten Kurzschlußbehandlung können Störungen beim Erosionsbetrieb besonders wirkungsvoll reduziert werden (Kombination der Ansprüche 1 und 8 bzw. 15 und 16).

Die Unterscheidung zwischen mechanischen und sonstigen Kurzschlüssen wird vorzugsweise anhand der Kurzschlußspannung und/oder der Kurzschlußdauer getroffen (Anspruch 9), wobei die Kurzschlußdauer-Schwelle vorzugsweise eine Funktion des Verhältnisses Elektrodendurchmesser/Werkstückdicke sein sollte (Anspruch 10). (Mechanische Kurzschlüsse haben eine vergleichsweise längere Dauer und eine kleinere Spannung.) Während eines mechanischen Kurzschlusses wird die Elektrode vorzugsweise mit konstanter Geschwindigkeit rückwärts und sonst, insbesondere auch während eines sonstigen Kurzschlusses, mit der Vorschubgeschwindigkeit Va vorwärts bewegt (Anspruch 11). (Sobald ein mechanischer Kurzschluß vorüber ist, wird die Elektrode somit wieder mit Va vorwärts bewegt.) Dabei ist die Rückzugsgeschwindigkeit vorzugsweise größer als die Vorschubgeschwindigkeit (Anspruch 12).

Derartige Ausgestaltungen der Erfindung ermöglichen auf besonders einfache Weise einen differenzierten Umgang mit Kurzschlüssen. So sind flexible Reaktionen leicht möglich, wodurch reaktionsbedingte zusätzliche Störungen minimiert werden können. Insbesondere die oben erwähnten Kurzschlüsse am Lochausgang bei Mikrobohrungen, welche -wie oben dargelegt- nicht-mechanischer Natur sind, führen nicht mehr zu einer Instabilitätsphase sowie damit zwingend verbundenen Präzisionsminderungen.

In einer weiteren bevorzugten Ausgestaltung der Erfindung wird die zu erodierende Strecke in genau zwei Abschnitte unterteilt, von denen einer (auch) zur Ermittlung von einem oder mehreren Steuerungswerten, insbesondere der Vorschubgeschwindigkeit für den Funkenerosionsprozeß im anderen Abschnitt genutzt wird, wobei das Verhältnis zwischen dem ersten und dem zweiten Abschnitt eine Funktion des Verhältnisses Elektrodendurchmesser/Werkstückdicke ist (Anspruch 13).

Auf diese Weise wird eine besonders einfache Handhabung der Erosionsmaschine gewährleistet: der Operateur muß beispielsweise bei Mikrodurchbohrungen von Werkstücken lediglich den Elektrodendurchmesser und die Werkstückdicke eingeben, um den gesamten Erosionablauf festzulegen.

In einer weiteren bevorzugten Ausgestaltung des erfindungsgemäßen Verfahrens ist die Elektrode für eine Mikrobohrung ausgelegt und der Bohrungsdurchmesser wird über eine Vorschubgeschwindigkeit Vb gesteuert, welche nicht größer als Va sein darf und gemäß der Formel Vb = kd*Ni*kk*4/(pi*D*D) für den jeweils gewünschten Lochdurchmesser bestimmt wird, wobei
- Ni =: Anzahl der Entladungen pro Zeiteinheit
- D =: gewünschter Lochdurchmesser (= 2∗sqrt (A/pi))
- A =: entsprechende Fläche (kd*Ni*kk/Vb)
- kd =: Abtragskoeffizient = abgetragenes Volumen pro Entladung
- kk =: Wirkkoeffizient = Verhältnis der Anzahl der Kurzschlüsse zur Anzahl der Entladungen
- pi =: 3,1415...
- sqrt =: Quadratwurzel
- Vb =: Vorschubgeschwindigkeit
bedeuten (Anspruch 14). Dabei wird kd experimentell für jede bestimmte Bearbeitungsaufgabe ermittelt. Ni und kk können im Rahmen des Meßabschnitts festgestellt werden, wenn neben der mittleren Vorschubgeschwindigkeit auch die Anzahl der Entladungen pro Zeiteinheit und die Anzahl der Kurzschlüsse im Verhältnis zur Anzahl der Impulse pro Zeiteinheit gemessen und gemittelt werden.

Auf diese Weise ist es möglich, mit einer begrenzten Anzahl von Elektrodendurchmessern beliebige Mikrobohrungen präzise vorzunehmen. Der Durchmesser einer funkenerosiven Mikrobohrung ist nämlich eine Funktion der zum Funkenspalt gelieferten Energie für den Materialabtrag. Bei konstanter Leistung ist dies eine Funktion der Elektrodenverweildauer an der jeweiligen Bohrstelle, und somit eine Funktion der Vorschubgeschwindigkeit Vb. Gleichzeitig ist ein erfindungsgemäß weitgehend störungsfreier Erosionsbetrieb gewährleistet.

Nachstehend wird die Erfindung anhand von Ausführungsbeispielen und der beigefügten Zeichnung noch näher erläutert. In der Zeichnung zeigen:
- Fig. 1: ein Blockschaltbild eines Beispiels für eine erfindungsgemäße Erosionsmaschine;
- Fig.2: eine genauere Darstellung eines Teils einer erfindungsgemäßen Erosionsmaschine;
- Fig.3: ein Verlaufsdiagramm des Multiplikationskoeffizienten Ka als Funktion des Verhältnisses Elektrodendurchmesser/-Werkstückdicke;
- Fig.4: ein Verlaufsdiagramm des Koeffizienten Ks als Funktion des Verhätnisses Elektrodendurchmesser/Werkstückdicke;
- Fig.5: ein Verlaufsdiagramm der Kurzschlußdauer-Schwelle Dkm als Funktion des Verhältnisses Elektrodendurchmesser/Werkstückdicke;
- Fig.6: ein Zeitdiagramm der Elektrodenlage bei einer funkenerosiven Mikrobohrung mit bekannten Regelstrategien;
- Fig.7: ein Zeitdiagramm der Elektrodenlage bei einer funkenerosiven Mikrobohrung mit einer erfindungsgemäßen Erosionsmaschine;
- Fig.8: eine Darstellung der Streubreite des Ausgangsloch-Durchmessers bei einer Serienbearbeitung von 18 Mikrobohrungen mit bekannten Regelstrategien; und
- Fig.9: eine Darstellung der Streubreite des Ausgangsloch-Durchmessers bei einer Serienbearbeitung von 18 Mikrobohrungen mit einer erfindungsgemäßen Regelstrategie.

Gemäß den Figuren bearbeitet eine Funkenerosionsmaschine ein Werkstück 7 nach dem erfindungsgemäßen Verfahren in wenigstens zwei Abschnitten. Dabei kommt es entscheidend darauf an, daß in wenigstens einem Abschnitt ein oder mehrere Steuerungswerte für den Funkenerosionsprozeß ermittelt und in wenigstens einem weiteren genutzt werden. Es wäre ferner möglich, die ermittelten Steuerungswerte beispielsweise in einem weiteren Zwischenabschnitt zu überprüfen. Vorzugsweise aber wird die gesamte Erosionsstrecke in nur zwei Abschnitte unterteilt, welche im folgenden kurz als Meßabschnitt und Ausgangsabschnitt bezeichnet werden. Das Längenverhältnis dieser beiden Abschnitte wird durch den Koeffizienten Ks beschrieben. (Es gilt demnach: Ms = (1 - Ks)*Sbzw. As = Ks*Smit Ms = Meßstrecke, As = Ausgangsstrecke und S = gesamte zu erodierende Strecke bzw. Werkstückdicke.)

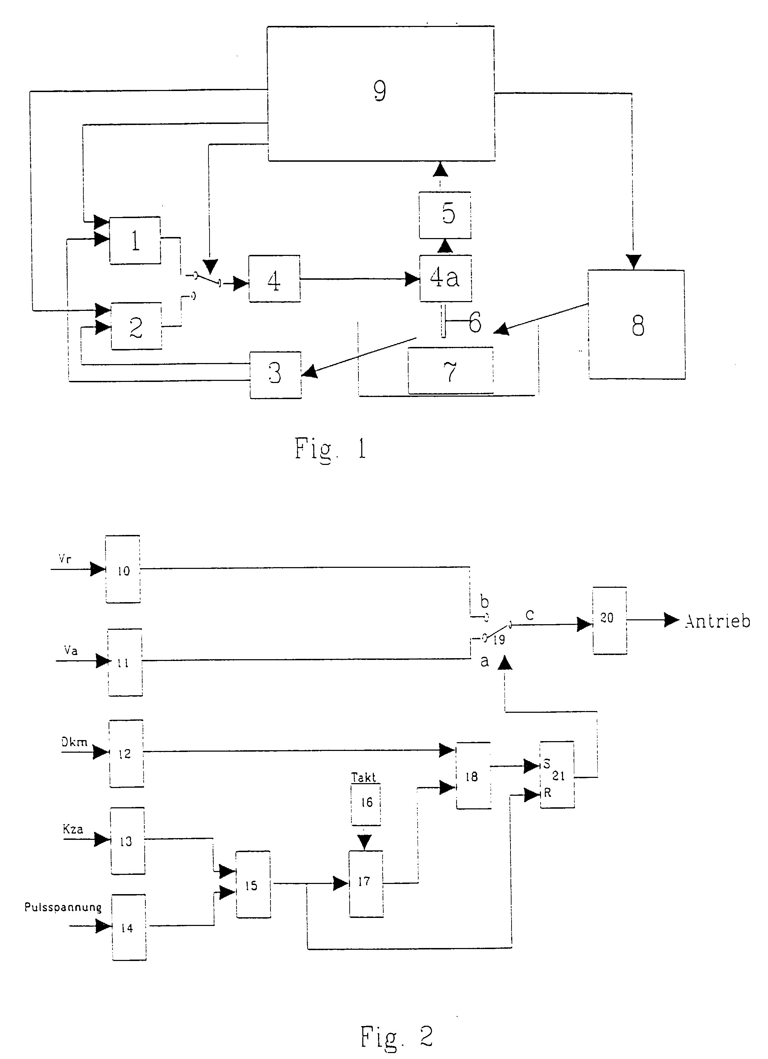

Im Meßabschnitt arbeitet die Funkenerosionsmaschine im wesentlichen nach bekannten Verfahren bzw. mit Mitteln bekannter Vorrichtungen. Hierzu regelt -wie in Fig.1 beispielhaft dargestellt-ein bekanntes Servosystem 2 in Verbindung mit einem Antrieb 4 und einem Motor 4a die Lage einer Elektrode 6 gegenüber dem Werkstück 7. Ein Generator 8 liefert Erosionsimpulse. Eine Meßschaltung 3 analysiert die Spalt- bzw. Funkenstreckenspannung und liefert Steuersignale für das Servosystem 2. Ein Encoder 5 liefert Informationen über die Lage der Elektrode 6 an eine numerische Steuerung 9. Die numerische Steuerung 9 berechnet die Vorschubgeschwindigkeit, sowie, anhand von Eingaben des Operateurs, das Verhältnis Elektrodendurchmesser/Werkstückdicke, den Multiplikationskoeffizienten Ka, den Streckenverhältniskoeffizienten Ks, eine Kurzschlußdauer-Schwelle Dkm und eine Komparatorschwelle Kza. Desweiteren werden während der Bearbeitung des Meßabschnitts die Anzahl der Entladungen pro Zeiteinheit und die Anzahl der Kurzschlüsse im Verhältnis zur Anzahl der Impulse pro Zeiteinheit gemessen und diese wie auch die Vorschubgeschwindigkeit gemittelt. Die gemittelte Vorschubgeschwindigkeit wird mit einem Koeffizienten Ka, welcher kleiner als eins ist, multipliziert. Die so erhaltene Geschwindigkeit wird als Ausgangsgeschwindigkeit Va bezeichnet. Ferner bestimmt die numerische Steuerung 9 eine Rückwärtsgeschwindigkeit Vr, welche größer als Va ist.

Die numerische Steuerung 9 gibt die im Meßabschnitt ermittelten Steuerwerte Vr, Va, Dkm, Kza an ein spezielles Servosystem 1 weiter. Wenn die Grenze zwischen Meß- und Ausgangsabschnitt erreicht wird, ersetzt die numerische Steuerung die Steuersignalverbindung zwischen dem bekannten Servosystem 2 und Antrieb 4 durch eine Verbindung zwischen dem speziellen Servosystem 1 und Antrieb 4, so daß nun die Steuerung der Elektrodenposition von der erfindungsgemäßen Vorrichtung 1 übernommen wird. Als eine Alternative kann das erfindungsgemäße Verfahren beispielsweise auch mittels eines oder mehrerer entsprechend programmierter Universalrechner anstelle der im folgenden erläuterten Vorrichtung durchgeführt werden. Ferner besteht die Möglichkeit, das Servosystem 1 und/oder das Servosystem 2 und/oder die numerische Steuerung 9 zusammenzufassen, beispielsweise in einem solchen Universalrechner. Dabei wird allerdings ein schneller Prozessor benötigt, da die Reaktionszeit der Schaltung sehr kurz sein muß.

Das spezielle Servosystem 1 ist in Fig.2 detailiert dargestellt. Die Vorwärts-(Va) und Rückwärtsgeschwindigkeit (Vr) werden in Registern 11 bzw. 10 gespeichert. Ein Datenselektor 19 ist zuerst in Stellung ac, und bleibt in dieser Stellung, solange das RS-Flipflop 21 seinen Zustand nicht ändert, d.i. solange keine mechanischen Kurzschlüsse von Bedeutung festgestellt werden. Um dies zu entscheiden, wird die Pulsspannung in einem Register 14 gespeichert, ihre Amplitude mit der Schwelle Kza in einem Komparator 15 verglichen, und in einem Zähler 17 die Kurzschlußdauer entsprechend einem Taktgenerator 16 aufgezählt. Die so ermittelte Kurzschlußdauer wird mit der Kurzschlußdauer-Schwelle Dkm durch einen vorzugsweise digitalen Komparator 18 verglichen. Wenn die Kurzschlußdauer größer als die durch die Kurzschlußdauer-Schwelle Dkm vorgegebene ist, dann wird das RS-Flipflop 21 gesetzt, und der Datenselektor 19 liefert die Rückwärtsgeschwindigkeit Vr an einen Register 20. Dieser speichert Vr und gibt sie zum Antrieb 4 weiter. Die Elektrode 6 bewegt sich infolgedessen rückwärts. Sobald der Kurzschluß aufgehoben ist, schaltet das RS-Flipflop 21 um, und die Elektrode wird wieder mit Va vorwärts bewegt.

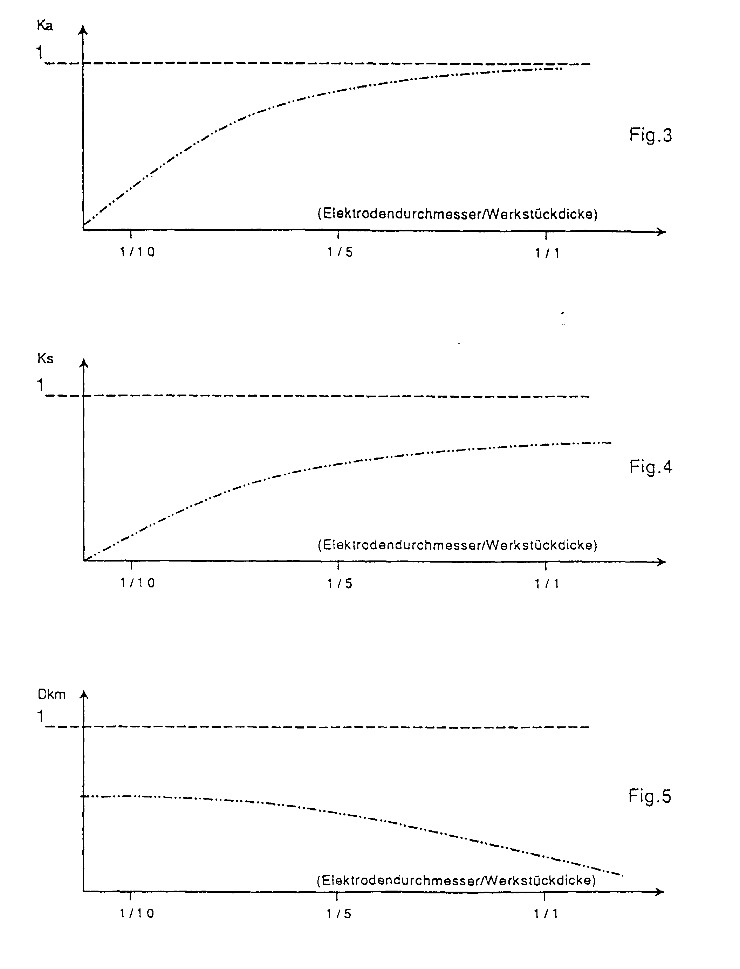

Fig.3 zeigt ein Verlaufsdiagramm des Multiplikationskoeffizienten Ka als eine Funktion des Verhältnisses Elektrodendurchmesser/Werkstückdicke. Für tiefe Mikrobohrungen muß dieser kleiner als für weniger tiefe Bohrungen sein, weil hier die Spülverhältnisse schlechter sind. Der Multiplikationskoeffizient Ka stellt eine relative Obergrenze der Vorschubgeschwindigkeit Va dar. Kleinere Geschwindigkeiten als Va bieten, wie oben dargestellt, zusätzliche Möglichkeiten den Lochdurchmesser zu steuern.

Fig.4 zeigt ein Verlaufsdiagramm des Koeffizienten Ks als eine Funktion des Verhältnisses Elektrodendurchmesser/Werkstückdicke. Für tiefe Mikrobohrungen muß dieser aus denselben Gründen wie Ka kleiner sein als für weniger tiefe Bohrungen. Für ein Verhältnis Elektrodendurchmesser/Werkstückdicke := V = 1/10 hat beispielsweise Ks = 0,1 gute Resultate gegeben.

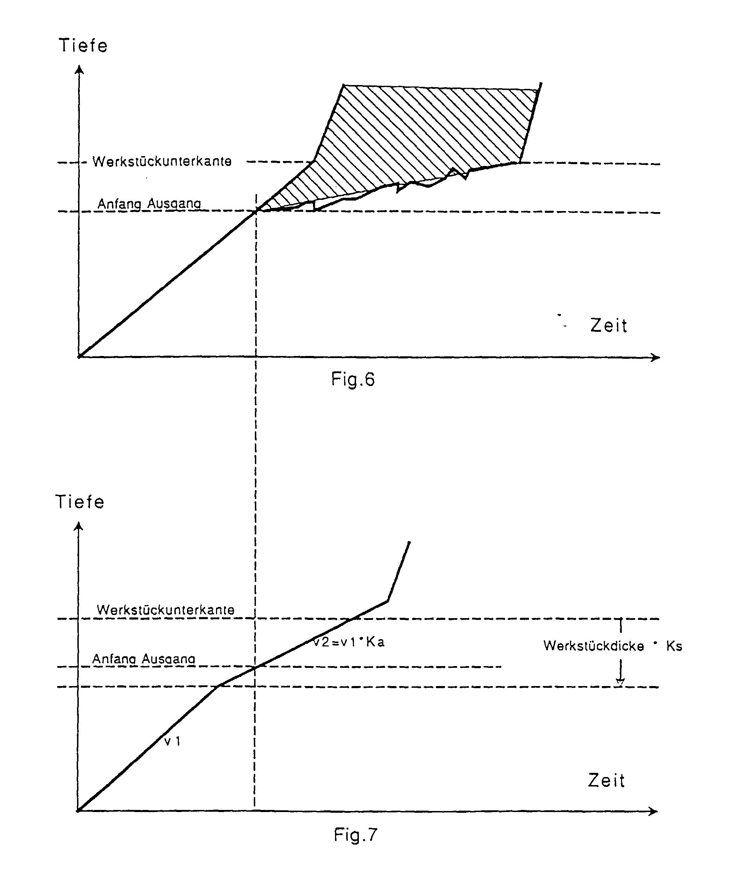

Fig.5 zeigt ein Verlaufsdiagramm der Kurzschlußdauer-Schwelle Dkm als eine Funktion des Verhältnisses Elektrodendurchmesser/Werkstückdicke. Für tiefe Mikrobohrungen muß diese größer sein als für weniger tiefe Bohrungen, da die schlechteren Spülverhältnisse den Erosionsprozeß naturgemäß instabiler werden lassen. Für V = 1/10 hat beispielsweise Dkm = 0,6 gute Resultate gegeben.

Fig.6 zeigt ein Zeitdiagramm der Elektrodenlage bei einer funkenerosiven Mikrobohrung mit bekannten Regelstrategien bzw. ohne eine erfindungsgemäße Vorrichtung. Die schraffierte Fläche stellt die Streuung des Prozesses beim Durchbruch dar, d.h. bei einer Serienbearbeitung liegen die Resultate in diesem Gebiet.

Fig.7 zeigt ein Zeitdiagramm der Elektrodenlage bei einer funkenerosiven Mikrobohrung mit einer erfindungsgemäßen Vorrichtung. Der Verlauf der Bearbeitung bei wiederholten Versuchen ist immer konstant und wiederholbar.

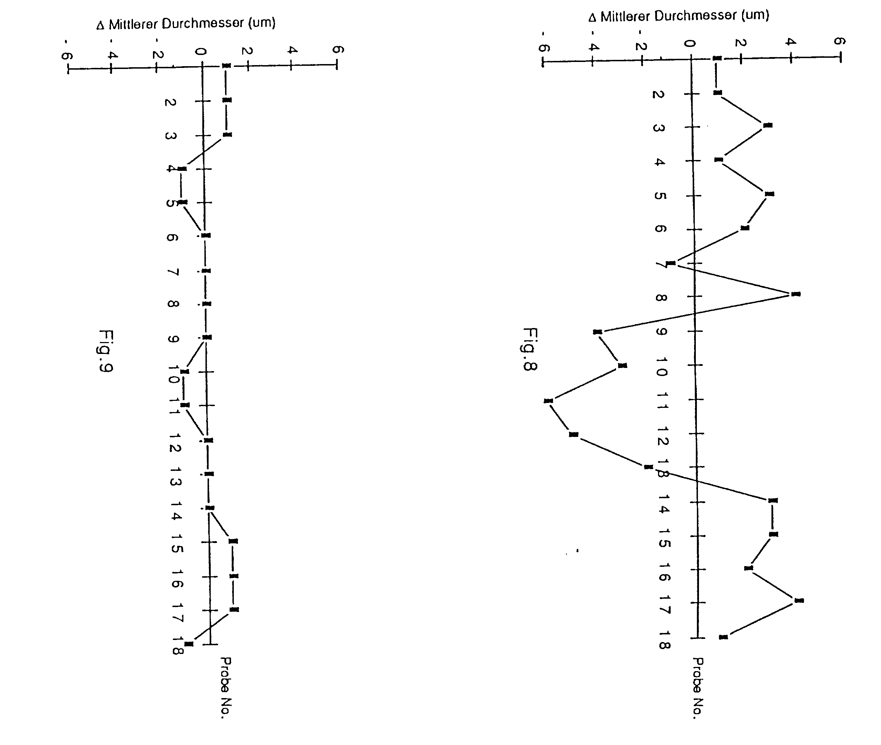

Fig. 8 zeigt eine Darstellung der Streubreite bzw. die Abweichung vom Sollwert des Ausgangsloch-Durchmessers bei einer Serienbearbeitung von 18 Mikrobohrungen mit bekannten Regelstrategien. Man erkennt eine beträchtliche Schwankung der Resultate von -6 Mikrometer bis +4 Mikrometer.

Fig.9 zeigt eine Darstellung der Streubreite des Ausgangsloch-Durchmessers bei einer Serienbearbeitung von 18 Mikrobohrungen mit einer erfindungsgemäßen Vorrichtung. Man erkennt die markante Verbesserung der Resultate. Die verbleibenden Schwankungen sind von anderen prozeßbeeinflussenden Faktoren verursacht und liegen naturgemäß bei +/- 1 Mikrometer.

## Patentansprüche

1. Verfahren zur Steuerung wenigstens eines Funkenerosionsprozesses zwischen wenigstens einem Werkstück (7) und wenigstens einer Elektrode (6), insbesondere einer Mikrobohrungselektrode, welches dadurch gekennzeichnet ist, daß:
a) die Erosionsstrecke in wenigstens einen Meßabschnitt und in wenigstens einen zeitlich nachfolgenden Erosionsabschnitt unterteilt wird;
b) in dem Meßabschnitt während der Erosionsbearbeitung Meßwerte wenigstens eines Prozeßparameters erfaßt werden;
c) aus den Meßwerten wenigstens eines Prozeßparameters ein oder mehrere Steuerungswerte ermittelt werden; und
d) diese Steuerungswerte zumindest teilweise in dem Erosionsabschnitt zur Steuerung der Erosionsbearbeitung beibehalten werden.

2. Verfahren nach Anspruch 1, bei welchem wenigstens einer der ermittelten Steuerungswerte eine für eine gewünschte Werkstückbearbeitung geeignete Vorschubgeschwindigkeit (Va) der Elektrode(n) (6) beinhaltet.

3. Verfahren nach Anspruch 2, bei welchem die Vorschubgeschwindigkeit (Va) aus der mittleren Vorschubgeschwindigkeit der Elektrode (6) im Meßabschnitt ermittelt wird.

4. Verfahren nach Anspruch 3, bei welchem die Vorschubgeschwindigkeit (Va) kleiner ist als die mittlere Vorschubgeschwindigkeit im Meßabschnitt.

5. Verfahren nach Anspruch 4, bei welchem die Vorschubgeschwindigkeit (Va) aus der mittleren Vorschubgeschwindigkeit im Meßabschnitt durch Multiplikation mit einem Koeffizienten (Ka), welcher kleiner als eins ist, ermittelt wird.

6. Verfahren nach Anspruch 5, bei welchem der Multiplikationskoeffizient (Ka) eine Funktion des Verhältnisses Elektrodendurchmesser/Werkstückdicke ist.

7. Verfahren nach einem der vorhergehenden Ansprüche, bei welchem die Elektrode (6) wenigstens in einem dem Meßabschnitt zeitlich nachfolgenden Erosionsabschnitt, insbesondere dem Schlußabschnitt einer Erosionsstrecke, mit der ermittelten Vorschubgeschwindigkeit (Va) wenigstens solange konstant bewegt wird, wie kein Kurzschluß auftritt.

8. Verfahren nach einem der vorhergehenden Ansprüche, bei welchem zwischen mechanischen und sonstigen Kurzschlüssen unterschieden und die Elektrodenbewegung bei mechanischen Kurzschlüssen anders als bei sonstigen Kurzschlüssen gesteuert wird.

9. Verfahren nach Anspruch 8, bei welchem die Unterscheidung zwischen mechanischen und sonstigen Kurzschlüssen anhand der Kurzschlußspannung und/-oder der Kurzschlußdauer getroffen wird.

10. Verfahren nach Anspruch 8 oder 9, bei welchem die Kurzschlußdauer mit einer Kurzschlußdauer-Schwelle (Dkm) verglichen wird, wobei die Kurzschlußdauer-Schwelle (Dkm) eine Funktion des Verhältnisses Elektrodendurchmesser/Werkstückdicke ist.

11. Verfahren nach einem der Ansprüche 8 bis 10, bei welchem die Elektrode (6) während eines mechanischen Kurzschlusses mit konstanter Geschwindigkeit rückwärts und sonst, insbesondere auch während eines sonstigen Kurzschlusses, vorwärts bewegt wird.

12. Verfahren nach Anspruch 11, bei welchem die Rückzuggeschwindigkeit größer als die Vorschubgeschwindigkeit ist.

13. Verfahren nach einem der vorhergehenden Ansprüche, bei welchem wenigstens eine zu erodierende Strecke in genau zwei Abschnitte unterteilt wird, von denen der erste zur Ermittlung von einem oder mehreren Steuerungswerten, insbesondere der Vorschubgeschwindigkeit (Va) für den Funkenerosionsprozeß im zweiten Abschnitt genutzt wird, wobei das Verhältnis (Ks) zwischen dem ersten und dem zweiten Abschnitt eine Funktion des Verhältnisses Elektrodendurchmesser/Werkstückdicke ist.

14. Verfahren nach einem der vorhergehenden Ansprüche, bei welchem die Elektrode (6) für eine Mikrobohrung ausgelegt ist und der Bohrungsdurchmesser über eine Vorschubgeschwindigkeit (Vb) gesteuert wird, welche nicht größer als die nach einem der Ansprüche 1 - 7 ermittelte Vorschubgeschwindigkeit (Va) ist und gemäß der Formel Vb = kd*Ni*kk*4/(pi*D*D)dem gewünschten Bohrlochdurchmesser (D) entsprechend bestimmt wird, wobei
Ni = Anzahl der Entladungen pro Zeiteinheit
D = gewünschter Bohrlochdurchmesser (= 2*sqrt (A/pi))
A = entsprechende Fläche (= kd*Ni*kk/Vb
kd = Abtragskoeffizient = abgetragenes Volumen pro Entladung
kk = Wirkkoeffizient = Verhältnis der Anzahl der Kurzschlüsse zur Anzahl der Entladungen
pi = 3,1415...
sqrt = Quadratwurzel
Vb = Vorschubgeschwindigkeit
bedeuten.

15. Vorrichtung zur Durchführung des Verfahrens nach einem der Ansprüche 1 bis 14, welche mit Antriebs- und Antriebssteuerungsmitteln (1, 2, 4, 4a, 9) zum Durchführen einer Relativbewegung zwischen wenigstens einem Werkstück und einer Elektrode, Meßmitteln (3, 5) zum Messen von Werten von Prozeßparametern, Umwandlungsmitteln (9) zum Umwandeln solcher Meßwerte in Steuerungswerte sowie Speichermitteln (10-14) ausgestattet ist, wobei:
a) Steuerungs- und Umwandlungsmittel (9) vorgesehen und derart ausgestaltet sind, daß sie die Erosionsstrecke in wenigstens einen Meßabschnitt und in wenigstens einen zeitlich nachfolgenden Erosionsabschnitt unterteilen;
b) die Meßmittel (3, 5) derart ausgestaltet sind, daß sie in dem Meßabschnitt während der Erosionsbearbeitung Meßwerte wenigstens eines Prozeßparameters erfassen;
c) die Steuerungs- und Umwandlungsmittel (9 ) ferner derart ausgestaltet sind, daß sie aus den Meßwerten wenigstens eines Prozeßparameters ein oder mehrere Steuerungswerte ermitteln;
d) die Speichermittel (10-14) derart ausgestaltet sind, daß sie die so erhaltenen Steuerungswerte speichern; und
e) die Antriebssteuerungsmittel (1, 2, 9) derart ausgestaltet sind, daß sie diese Steuerungswerte zumindest teilweise in dem Erosionsabschnitt zur Steuerung der Erosionsbearbeitung beibehalten.

16. Vorrichtung nach Anspruch 15, welche mit Mitteln (3, 5) zur Messung von Werten von Prozeßparametern und Mitteln (9, 10 - 19, 21) zur Umwandlung solcher Meßwerte in Steuerungswerte bzw. -signale ausgestattet ist, bei welcher
a) die Mittel (3, 5) zur Messung von Werten von Prozeßparametern beim Auftreten von Kurzschlüssen diesbezüglich signifikante Werte messen,
b) die Mittel (9, 10 - 19, 21) zur Umwandlung von Meßwerten in Steuerungswerte aufgrund dieser Meßwerte zwischen mechanischen und sonstigen Kurzschlüssen unterscheiden und
c) bei mechanischen Kurzschlüssen andere Steuerungswerte bzw. -signale als bei sonstigen Kurzschlüssen ausgeben.

17. Vorrichtung nach Anspruch 15 und 16, bei welchem die Umwandlungsmittel (9, 10-19, 21) umfassen:
a) Speichermittel (10, 11), welche ermittelte Steuerungswerte, insbesondere eine für eine gewünschte Werkstückbearbeitung geeignete Vorschubgeschwindigkeit (Va) und eine Rückwärtsgeschwindigkeit (Vr), speichern,
b) ein Datenselektormittel (19), welches von den Speichermitteln (9) und (10) eines auswählt,
c) ein Schaltmittel (21) zur Steuerung des Datenselektormittels (19) und
d) Kurzschlußbeurteilungsmittel (12 - 18), welche Kurzschlüsse als wesentlich bzw. mechanisch oder unwesentlich bzw. sonstige einstufen, so daß bei mechanischen Kurzschlüssen über das Schaltmittel (21) und das nachfolgende Datenselektormittel (19) die Elektrode (6) mit der Rückwärtsgeschwindigkeit (Vr) bis zur Beendigung des Kurzschlusses zurückgezogen wird.
vorgesehen sind.

18. Vorrichtung nach Anspruch 17, bei welchem die Kurzschlußbeurteilungsmittel (12 - 18) eine Pulsspannung in einem Register (14) speichern, deren Amplitude mit der Schwelle (Kza) in einem Komparator (15) vergleichen, in einem Zähler (17) die Kurzschlußdauer entsprechend einem Taktgenerator (16) aufzählen und die so ermittelte Kurzschlußdauer mit einer Kurzschlußdauer-Schwelle (Dkm) durch einen Komparator (18) vergleichen und entsprechende Steuersignale an das Schaltmittel (21) weitergeben.

## Claims

1. A method for controlling at least one electrical discharge machining process between at least one workpiece (7) and at least one electrode (6), in particular a microbore electrode, which is
**characterised in that:**
a) the erosion distance is divided into at least one measurement portion and into at least one chronologically following erosion portion;
b) measured values of at least one process parameter are detected in the measurement section during the erosion machining;
c) one or more control values are determined from the measured values of at least one process parameter; and
d) these control values are retained at least to some extent in the erosion section to control the erosion machining.

2. A method according to Claim 1, in which at least one of the determined control values contains a feed velocity (Va) of the electrode(s) (6) that is suitable for a desired workpiece machining.

3. A method according to Claim 2, in which the feed velocity (Va) is determined from the average feed velocity of the electrode (6) in the measurement section.

4. A method according to Claim 3, in which the feed velocity (Va) is less than the average feed velocity in the measurement section.

5. A method according to Claim 4, in which the feed velocity (Va) is determined from the mean/average feed velocity in the measurement section by multiplication with a coefficient (Ka) which is less than one.

6. A method according to Claim 5, in which the multiplication coefficient (Ka) is a function of the electrode diameter/workpiece thickness ratio.

7. A method according to one of the preceding Claims, in which the electrode (6) is moved constantly at least in an erosion section that chronologically follows the measurement section, in particular the final section of an erosion distance, at the determined feed velocity (Va) at least as long as no short-circuit occurs.

8. A method according to one of the preceding Claims, in which a distinction is made between mechanical and other short-circuits and the electrode movement during mechanical short-circuits is controlled differently than in other short-circuits.

9. A method according to Claim 8, in which the differentiation between mechanical and other short-circuits is made by means of the short-circuit voltage and/or the short-circuit time.

10. A method according to Claim 8 or 9, in which the short-circuit time is compared with a short-circuit time threshold (Dkm), in which case the short-circuit time threshold (Dkm) is a function of the electrode diameter/workpiece thickness ratio.

11. A method according to one of Claims 8 to 10, in which the electrode (6) is moved backwards at constant speed during a mechanical short circuit and otherwise is moved forwards, in particular also during another short-circuit.

12. A method according to Claim 11, in which the return motion velocity is greater than the feed velocity.

13. A method according to one of the preceding Claims, in which at least one distance to be eroded is divided into precisely two sections, the first of which is used for the determination of one or more control values, in particular the feed velocity (Va) for the EDM process in the second section, whereby the ratio (Ks) between the first and the second section is a function of the electrode diameter/workpiece thickness ratio.

14. A method according to one of the preceding Claims, in which the electrode (6) is designed for a micro bore and the bore diameter is controlled via a feed velocity (Vb), which is not greater than the feed velocity (Va) determined in accordance with one of Claims 1 to 7 and is determined according to the formula Vb = kd*Ni*kk*4/(pi*D*D) according to the desired borehole diameter (D), wherein
Ni = number of discharges per unit of time
D = desired borehole diameter (= 2*sqrt (A/pi))
A = corresponding area (= kd*Ni*kk/Vb)
kd = erosion coefficient = eroded volume per discharge
kk = effective coefficient = ratio of the number of short-circuits to the number of discharges
pi = 3.1415...
sqrt = square root
Vb = feed velocity.

15. A apparatus for the performance of the method according to one of Claims 1 to 14, which is equipped with drive and drive control means (1, 2, 4, 4a, 9) for performing a relative movement between at least one workpiece and an electrode, measurement means (3, 5) for measuring values of process parameters, conversion means (9) for converting such measured values into control values and memory means (10-14), wherein:
a) control and conversion means are provided and constructed in such a manner that they divide the erosion distance into at least one measurement section and into at least one chronologically following erosion section;
b) the measurement means (3, 5) are constructed in such a manner that they detect measured values of at least one process parameter in the measurement section during the erosion machining;
c) the control and conversion means (9) are also constructed in such a manner that they determine one or more control values from the measured values of at least one process parameter;
d) the memory means (10-14) are constructed in such a manner that they store the control values that are obtained in this manner;
and
e) the drive control means (1, 2, 9) are constructed in such a manner that they retain these control values at least to some extent in the erosion section to control the erosion machining.

16. A apparatus according to Claim 15, which is equipped with means (3, 5) for measuring values of process parameters and means (9, 10 - 19, 21) for the conversion of such measured values into control values and signals, in which
a) upon the occurrence of short-circuits the means (3, 5) for measuring values of process parameters measure significant values with respect thereto,
b) the means (9, 10 - 19, 21) for the conversion of measured values into control values distinguish between mechanical and other short-circuits by virtue of these measured values and
c) in the event of mechanical short-circuits output other control values or signals than in the case of other short-circuits.

17. An apparatus according to Claim 15 and 16, in which the conversion means (9, 10-19, 21) comprise:
a) memory means (10, 11) which store determined control values, in particular a feed velocity (Va) suitable for a desired workpiece machining and a backwards velocity (Vr),
b) a data selector means (19), which selects one of the memory means (9) and (10),
c) a switching means (21) for controlling the data selector means (19) and
d) short-circuit assessment means (12 - 18), which classify short-circuits as substantial and mechanical or insubstantial and other, so that in the event of mechanical short-circuits the electrode (6) is withdrawn at the return motion velocity (Vr) until the end of the short-circuit via the switching means (21) and the following data selection means (19).
are provided.

18. An apparatus according to Claim 17, in which the short-circuit assessment means (12 - 18) store a pulse voltage in a register (14), compare its amplitude with the threshold (Kza) in a comparator (15), in a counter (17) count the short-circuit time according to a timing generator (16) and compare the short-circuit time determined in this manner with a short-circuit time threshold (Dkm) by a comparator (18) and transmit further control signals to the switching means (21).

## Revendications

1. Procédé de pilotage d'au moins un processus d'électroérosion portant sur au moins une pièce à usiner (7) au moyen d'au moins une électrode (6), en particulier d'une électrode de microperçage, caractérisé en ce que :
a) le trajet d'érosion est divisé en au moins un secteur de mesure et en au moins un secteur d'érosion qui suit temporellement ;
b) pendant l'usinage par érosion, au moins un paramètre du processus est mesuré dans le secteur de mesure ;
c) à partir des mesures d'au moins un paramètre du processus, un ou plusieurs paramètres de pilotage sont déterminés ; et
d) ces paramètres de pilotage sont conservés au moins partiellement pour le pilotage de l'électroérosion dans le secteur d'érosion.

2. Procédé selon la revendication 1, dans lequel au moins un des paramètres de pilotage élaborés maintient une vitesse d'avance (Va) des électrodes ou de l'électrode(6) adaptée à l'usinage désiré.

3. Procédé selon la revendication 2, dans lequel la vitesse d'avance (Va) est déterminée à partir de la vitesse d'avance moyenne de l'électrode (6) dans le secteur de mesure.

4. Procédé selon la revendication 3, dans lequel la vitesse d'avance (Va) est inférieure à la vitesse d'avance moyenne dans le secteur de mesure.

5. Procédé selon la revendication 4, dans lequel la vitesse d'avance (Va) est définie à partir de la vitesse d'avance moyenne dans le secteur de mesure par multiplication par un coefficient (Ka), lequel est inférieur à un.

6. Procédé selon la revendication 5, dans lequel le coefficient de multiplication (Ka) est une fonction du rapport diamètre d'électrode/ épaisseur de la pièce à usiner.

7. Procédé selon l'une des revendications précédentes, dans lequel l'électrode (6) est déplacée dans au moins un secteur d'érosion qui suit temporellement le secteur de mesure, en particulier dans le secteur terminal d'un trajet d'érosion, à la vitesse d'avance (Va) qui a été déterminée, de manière constante aussi longtemps qu'il n'y a pas de court-circuit.

8. Procédé selon l'une des revendications précédentes, dans lequel on distin-gue les courts-circuits mécaniques des autres, et on pilote le mouvement d'électrode en cas de court-circuit mécanique autrement que pour les autres courts-circuits.

9. Procédé selon la revendication 8, dans lequel la distinction entre courts-circuits mécaniques et autres courts-circuits est faite en se basant sur la tension et/ou la durée du court-circuit.

10. Procédé selon la revendication 8 ou 9, dans lequel la durée du court-circuit est comparée à un seuil de durée de court-circuit (Dkm), qui est une fonc-tion du rapport diamètre d'électrode/épaisseur de la pièce à usiner.

11. Procédé selon l'une des revendications 8 à 10, dans lequel l'électrode (6) se déplace en cas de court-circuit mécanique à une vitesse constante vers l'arrière, et également vers l'avant, en particulier lors d'un autre type de court-circuit.

12. Procédé selon la revendication 11, dans lequel la vitesse de retrait est supérieure à la vitesse d'avance.

13. Procédé selon l'une des revendications précédentes, dans lequel au moins un trajet à éroder est divisé exactement en deux secteurs, dont le premier sert à déterminer un ou plusieurs paramètres de pilotage, en particulier la vitesse d'avance (Va) pour le processus d'électroérosion dans le deuxième secteur, le rapport (Ks) entre le premier et le deuxième secteur étant une fonction du rapport diamètre d'électrode/épaisseur de la pièce à usiner.

14. Procédé selon l'une des revendications précédentes, dans lequel l'électrode (6) est conçue pour un microperçage, le diamètre de trou étant piloté au moyen d'une vitesse d'avance (Vb), qui ne peut être supérieure à la vitesse d'avance (Va) élaborée selon revendications 1-7, et qui est déterminée, en fonction du diamètre de trou de perçage (D) souhaité, par la formule Vb = kd*Ni*kk*4/(pi*D*D), dont les termes signifient :
Ni = nombre de décharges par unité de temps
D = diamètre de trou de perçage souhaité (= 2*sqrt (A/pi))
A = surface correspondante (kd*Ni*kk/Vb)
Kd = coefficient d'érosion = volume érodé par décharge
Kk = coefficient d'efficacité = rapport du nombre de courts-circuits au nombre de décharges
Pi = 3.1415...
Sqrt = racine carrée
Vb = vitesse d'avance.

15. Dispositif en vue de la mise en oeuvre du procédé selon l'une des revendications 1 à 14, muni des moyens (1, 2, 4, 4a, 9) d'entraînement et de pilotage de cet entraînement pour exécuter un mouvement relatif entre au moins une pièce à usiner et une électrode, des moyens (3, 5) de mesure des valeurs de paramètres de procédé, des moyens de conversion (9) pour convertir de telles mesures en données de pilotage ainsi que des moyens de stockage (10-14), l'ensemble étant caractérisé en ce que :
a) les moyens de pilotage et de conversion (9) sont prévus et aménagés de manière qu'ils divisent le trajet à éroder en au moins un secteur de mesure et au moins un secteur d'érosion, qui suit le précédent temporellement ;
b) les moyens de mesure (3, 5) sont aménagés de manière qu'en cours d'érosion les valeurs d'au moins un paramètre de procédé soient mesurées dans le secteur de mesure ;
c) les moyens de pilotage et de conversion (9) sont en outre aménagés de manière qu'ils élaborent une ou plusieurs données de pilotage à partir des mesures d'au moins un paramètre de procédé ;
d) les moyens de stockage (10-14) sont aménagés pour mémoriser les données de pilotage ainsi obtenues ; et
e) les moyens de pilotage (1, 2, 9) de l'entraînement sont aménagés de manière que ces données de pilotage soient gardées au moins partiellement dans le secteur d'érosion en vue du pilotage de l'usinage par érosion.

16. Dispositif selon la revendication 15, qui est doté des moyens (3, 5) de mesure de paramètres de procédé, et des moyens (9, 10 - 19, 21) de conversion de telles données de mesures en données ou en signaux de pilotage, dans lequel :
a) les moyens de mesure (3, 5) des valeurs des paramètres de procédé mesurent, lors de la survenue de courts-circuits, des valeurs significatives à cet égard,
b) les moyens (9, 10 - 19, 21) de conversion de mesures en données de pilotage font la distinction, sur la base de ces mesures, entre courts-circuits mécaniques et les autres, et
c) délivrent, lors de courts-circuits mécaniques, d'autres données ou de signaux de pilotage que pour d'autres courts-circuits.

17. Dispositif selon les revendications 15 et 16, dans lequel les moyens de conversion (9, 10 - 19, 21) incluent :
a) des moyens de stockage (10, 11) qui mémorisent les données de pilotage qui sont élaborées, notamment la vitesse d'avance (Va) et la vitesse de retrait (Vr) adaptées à un usinage souhaité,
b) un moyen de sélection de données (19), qui sélectionne un des moyens de stockage (9) et (10),
c) un moyen de commutation (21) pour le pilotage du moyen de sélection de données (19) et
d) des moyens (12 - 18) d'évaluation de courts-circuits, qui les classent en courts-circuits importants, c'est-à-dire mécaniques, ou en non importants, donc d'un autre type, de sorte qu'en cas de courts-circuits mécaniques, par l'intermédiaire du moyen de commutation (21) suivi du moyen de sélection de données (19), l'électrode (6) recule à la vitesse (Vr) de retrait jusqu'à la cessation du court-circuit.

18. Dispositif selon la revendication 17, dans lequel les moyens (12 - 18) d'évaluation de courts-circuits mémorisent une tension d'impulsion de décharge dans un registre (14), comparent l'amplitude de cette tension avec la valeur de seuil (Kza) dans un comparateur (15), déterminent la durée du court-circuit avec un compteur (17) associé à une horloge interne (16), comparent la durée de court-circuit ainsi déterminée avec un seuil de durée de court-circuit (Dkm) et transmettent des signaux de pilotage appropriés au moyen de commutation (21).
